# EUROPÄISCHE PATENTSCHRIFT

(11) **EP 1 281 051 B1**
(45) Veröffentlichungstag und Bekanntmachung des Hinweises auf die Patenterteilung: **18.03.2009**
(21) Anmeldenummer: 01929627.6
(22) Anmeldetag: 08.05.2001
(51) Int. Cl.: G01F 23/296

(54) **VORRICHTUNG ZUR FESTSTELLUNG UND/ODER ÜBERWACHUNG DES FÜLLSTANDES EINES FÜLLGUTS IN EINEM BEHÄLTER**
DEVICE FOR DETERMINING AND/OR MONITORING THE LEVEL OF A FILLING MATERIAL IN A CONTAINER
DISPOSITIF POUR DETERMINER ET/OU CONTROLER LE NIVEAU DE REMPLISSAGE D'UN PRODUIT CONTENU DANS UN RECIPIENT

(30) Priorität: 10.05.2000 DE 10022891
(43) Veröffentlichungstag der Anmeldung: 05.02.2003
(73) Patentinhaber: Endress + Hauser GmbH + Co. KG, 79689 Maulburg (DE)
(72) Erfinder: BRUTSCHIN, Wolfgang, 79650 Schopfheim (DE); LOPATIN, Sergej, 79540 Lörrach (DE)
(74) Vertreter: Andres, Angelika Maria
(86) Internationale Anmeldenummer: PCT/EP2001/005207
(87) Internationale Veröffentlichungsnummer: WO 2001/086236

(56) Entgegenhaltungen:
- EP-A- 0 875 740
- EP-A- 0 985 916
- DE-A- 4 429 236
- US-A- 5 966 983

## Beschreibung

Die Erfindung bezieht sich auf eine Vorrichtung zur Feststellung und/oder Überwachung des Füllstandes eines Füllguts in einem Behälter bzw. zur Ermittlung der Dichte eines Mediums in dem Behälter, wobei eine an einer Membran befestigte schwingfähige Einheit vorgesehen ist, wobei die schwingfähige Einheit auf der Höhe des vorbestimmten Füllstandes angebracht ist bzw. wobei die schwingfähige Einheit so angebracht ist, daß sie bis zu einer definierten Eintauchtiefe in das Medium eintaucht, wobei eine Sende-/Empfangseinheit vorgesehen ist, die die Membran und die schwingfähige Einheit mit einer vorgegebenen Erregerfrequenz zu Schwingungen anregt und die die Schwingungen der schwingfähigen Einheit empfängt, und wobei eine Regel-/Auswerteeinheit vorgesehen ist, die das Erreichen des vorbestimmten Füllstandes erkennt, sobald eine vorgegebene Frequenzänderung auftritt bzw. die anhand der Schwingfrequenz der schwingfähigen Einheit die Dichte des Mediums ermittelt.

Es sind bereits Vorrichtungen mit zumindest einem Schwingelement, sog. Vibrationsdetektoren, zur Detektion bzw. zur Überwachung des Füllstandes eines Füllguts in einem Behälter bekannt geworden. Bei dem Schwingelement handelt es sich üblicherweise um zumindest einen Schwingstab, der an einer Membran befestigt ist. Die Membran wird über einen elektromechanischen Wandler, z. B. ein piezoelektrisches Element, zu Schwingungen angeregt. Aufgrund der Schwingungen der Membran führt auch das an der Membran befestigte Schwingelement Schwingungen aus.

Als Füllstandsmeßgeräte ausgebildete Vibrationsdetektoren nutzen den Effekt aus, daß die Schwingungsfrequenz und die Schwingungsamplitude abhängig sind von dem jeweiligen Bedeckungsgrad des Schwingelements: Während das Schwingelement in Luft frei und ungedämpft seine Schwingungen ausführen kann, erfährt es eine Frequenz- und Amplitudenänderung, sobald es teilweise oder vollständig in das Füllgut eintaucht. Anhand einer vorbestimmten Frequenzänderung (üblicherweise wird die Frequenz gemessen) läßt sich folglich ein eindeutiger Rückschluß auf das Erreichen des vorbestimmten Füllstandes des Füllguts in dem Behälter ziehen. Füllstandsmeßgeräte werden übrigens vornehmlich als Überfüllsicherungen oder zum Zwecke des Pumpenleerlaufschutzes verwendet.

Darüber hinaus wird die Dämpfung der Schwingung des Schwingelements auch von der jeweiligen Dichte des Füllguts beeinflußt. Daher besteht bei konstantem Bedeckungsgrad eine funktionale Beziehung zur Dichte des Füllguts, so daß Vibrationsdetektoren sowohl für die Füllstands- als auch für die Dichtebestimmung bestens geeignet sind. In der Praxis werden zwecks Überwachung und Erkennung des Füllstandes bzw. der Dichte des Füllguts in dem Behälter die Schwingungen der Membran aufgenommen und mittels zumindest eines Piezoelements in elektrische Empfangssignale umgewandelt. Die elektrischen Empfangssignale werden anschließend von einer Auswerte-Elektronik ausgewertet. Im Falle der Füllstandsbestimmung überwacht die Auswerte-Elektronik die Schwingungsfrequenz und/oder die Schwingungsamplitude des Schwingelements und signalisiert den Zustand 'Sensor bedeckt' bzw. 'Sensor unbedeckt', sobald die Meßwerte einen vorgegebenen Referenzwert unter- oder überschreiten. Eine entsprechende Meldung an das Bedienpersonal kann auf optischem und/oder auf akustischem Weg erfolgen. Alternativ oder zusätzlich wird ein Schaltvorgang ausgelöst; so wird etwa ein Zu- oder Ablaufventil an dem Behälter geöffnet oder geschlossen.

Aus der EP 0 985 916 A1 ist eine äußerst vorteilhafte Variante einer Sende-/ Empfangseinheit bekannt geworden, über die einerseits die Membran des Vibrationsdetektors zu Schwingungen angeregt wird und über die andererseits die Schwingungen der Membran aufgenommen und in elektrische Signale umgewandelt werden. Die Sende- und die Empfangselektrode haben jeweils im wesentlichen eine halbkreisförmige Ausgestaltung und sind auf derselben Seite eines scheibenförmigen piezoelektrischen Elements angeordnet; das piezoelektrische Element selbst ist homogen polarisiert und hat einen kreisförmigen Querschnitt. Sende- und Empfangselektrode sind symmetrisch zu einer in der Membranebene liegenden Achse positioniert, wobei die Achse einer Diagonalen der Kreisfläche des piezoelektrischen Elements entspricht.

Das piezoelektrische Element trägt auf der Seite, die der die Elektrodenstruktur tragenden Seite des piezoelektrischen Elements gegenüberliegt, näherungsweise ganzflächig eine Massenelektrode. Falls die Membran und das Gehäuse des Vibrationsdetektors leitfähig sind, genügt es, die Masseelektrode über die Membran in elektrischen Kontakt mit dem Gehäuse zu bringen. Darf aus sicherheitstechnischen Gründen keine elektrisch leitende Verbindung zwischen der Membran bzw. dem Gehäuse und dem piezoelektrischen Element bestehen, so ist zwischen der Membran und dem piezoelektrischen Element eine Isolierschicht angeordnet. In diesem Fall liegt die Masseelektrode über eine Anschlußelektrode, die auf der die Elektrodenstruktur tragenden Seite des piezoelektrischen Elements angeordnet ist, auf Masse.

Der Erfindung liegt die Aufgabe zugrunde, die Sende-/Empfangseinheit eines Vibrationsdetektors derart zu verbessern, daß der Einfluß von Störsignalen minimiert wird.

Die Aufgabe wird dadurch gelöst, daß es sich bei der Sende-/Empfangseinheit um ein scheibenförmiges piezoelektrisches Element handelt, auf dessen erster Seite eine Elektrodenstruktur vorgesehen ist, wobei die Elektrodenstruktur zumindest zwei Sendeelektroden und zwei Empfangselektroden aufweist und wobei jeweils die erste Sendeelektrode der zweiten Sendeelektrode bzw. wobei die erste Empfangselektrode der zweiten Empfangselektrode im wesentlichen punktsymmetrisch gegenüberliegt.

Die erfindungsgemäße Lösung bringt gleich mehrere Vorteile:
1. Die Nutzung einer piezoelektrischen Scheibe als Sende-/Empfangseinheit führt dazu, daß der entsprechende Platzbedarf in dem Vibrationsdetektor gering bemessen sein kann.
2. Die scheibenförmige piezoelektrische Sende-/Empfangseinheit ist relativ einfach zu fertigen.
3. Infolge der symmetrischen Anordnung von Sende- und Empfangselektroden sind die Anschlüsse für die beiden Elektrodenpaare problemlos austauschbar. Eine fehlerhafte Kontaktierung der Elektroden ist daher ausgeschlossen.
4. Die elektrische Kontaktierung kann auf einfache Weise von einer Seite her z. B. im Reflow-Verfahren erfolgen, da Elektroden und Gegenelektroden der Sende-/Empfangseinheit auf derselben Seite des piezoelektrischen Elements angeordnet sind.

Gemäß einer vorteilhaften Weiterbildung der erfindungsgemäßen Vorrichtung ist vorgesehen, daß die Sendeelektroden und/oder die Empfangselektroden der Sende-/Empfangseinheit im wesentlichen formgleich sind. Dies ist besonders vorteilhaft im Hinblick auf die bereits zuvor erwähnten Vorzüge, die sich aus einem symmetrischen Aufbau der Elektrodenstruktur ergeben.

Eine bevorzugte Ausgestaltung der erfindungsgemäßen Vorrichtung schlägt darüber hinaus vor, daß die Sendeelektroden und/oder die Empfangselektroden die Form von 90°-Kreissegmenten aufweisen.

Gemäß einer vorteilhaften Variante der erfindungsgemäßen Vorrichtung ist vorgesehen, daß die erste und die zweite Sendeelektrode bzw. daß die erste und die zweite Empfangselektrode entgegengesetzt polarisiert sind. Bevorzugt kommt ein Inverter zum Einsatz, der das an einer der beiden Sendeelektroden der Sendeeinheit anliegende Sendesignal invertiert. Weiterhin schlägt eine vorteilhafte Ausgestaltung der erfindungsgemäßen Vorrichtung einen Differenzverstärker vor, an dessen Eingängen die an den beiden Empfangselektroden abgegriffenen Empfangssignale anliegen. Durch die Ausgestaltung wird eine wesentliche Erhöhung der Störfestigkeit gegenüber Gleichtaktstörungen, z. B. Netzbrummen oder Fremdvibrationen, erreicht. Bei bekannten Vorrichtungen wurden Gleichtaktstörungen bislang dadurch ausgeschaltet, daß in der Elektronik eine galvanische Trennung vorgesehen war. Bei der erfindungsgemäßen Lösung kann der für die galvanische Trennung erforderliche Übertrager vollständig eingespart werden, was sich in einer bemerkenswerten Senkung der Herstellungskosten niederschlägt.

Gemäß einer alternativen Ausbildung der erfindungsgemäßen Vorrichtung wird vorgeschlagen, daß die Sendeelektroden und die Empfangselektroden der Sende-/Empfangseinheit gleichsinnig polarisiert sind, wobei die beiden Sende- und die beiden Empfangselektroden punktsymmetrisch zueinander angeordnet sind. Störsignale, die auf Fremdvibrationen zurückzuführen sind, werden eliminiert, da sie betragsmäßig gleich sind, aber ein entgegengesetztes Vorzeichen aufweisen.

Weiterhin ist bezüglich der beiden Varianten der erfindungsgemäßen Vorrichtung vorgesehen, daß das piezoelektrische Element auf der zweiten Seite, welche der die Elektrodenstruktur tragenden ersten Seite gegenüberliegt, zumindest teilweise mit einer leitfähigen Beschichtung versehen ist. Diese Ausgestaltung kann sowohl in Verbindung mit gleichsinnig als auch mit gegensinnig polarisierten Sende- und/oder Empfangselektroden verwendet werden.

Um die Fertigung zu erleichtern, insbesondere um die Sende-/Empfangseinheit in einem Verfahrensschritt über z. B. ein Reflow-Verfahren kontaktieren zu können, ist auf der die Elektrodenstruktur tragenden Seite des piezoelektrischen Elements eine Anschlußelektrode vorgesehen, die in zumindest einem Bereich mit der die Masseelektrode bildenden leitfähigen Schicht auf der zweiten Seite des piezoelektrischen Elements verbunden ist.

Eine bevorzugte Weiterbildung der erfindungsgemäßen Vorrichtung sieht vor, daß die Anschlußelektrode streifenförmig ausgebildet ist und die Seite des piezoelektrischen Elements, die die Elektrodenstruktur trägt, vorzugsweise in zwei Hälften gleicher Fläche unterteilt.

Die Erfindung wird anhand der nachfolgenden Zeichnungen näher erläutert. Es zeigt:
Fig. 1: eine schematische Darstellung der erfindungsgemäßen Vorrichtung,
Fig. 2a: eine Draufsicht auf die erste die Elektrodenstruktur tragende Seite des piezoelektrischen Elements gemäß einer ersten Ausführungsform der erfindungsgemäßen Vorrichtung,
Fig. 2b: eine Seitenansicht des in Fig. 2a dargestellten piezoelektrischen Elements,
Fig. 2c: eine Draufsicht auf die zweite Seite des piezoelektrischen Elements gemäß der ersten Ausführungsform der erfindungsgemäßen Vorrichtung,
Fig. 3: eine Draufsicht auf eine bevorzugte Elektrodenstruktur gemäß der ersten Ausführungsform der erfindungsgemäßen Vorrichtung,
Fig. 4: eine schematische Darstellung der elektrischen Kontaktierung der in den Figuren Fig. 2 bis Fig. 3 gezeigten Ausführungsform der erfindungsgemäßen Vorrichtung,
Fig. 5a: eine Draufsicht auf die erste die Elektrodenstruktur tragende Seite des piezoelektrischen Elements gemäß einer zweiten Ausführungsform der erfindungsgemäßen Vorrichtung,
Fig. 5b: eine Draufsicht auf die zweite die leitfähige Schicht tragende Seite des piezoelektrischen Elements gemäß der zweiten Ausführungsform der erfindungsgemäßen Vorrichtung und
Fig. 6: ein Blockschaltbild der in den Figuren Fig. 5a und Fig. 5b gezeigten zweiten Ausführungsform der erfindungsgemäßen Vorrichtung.

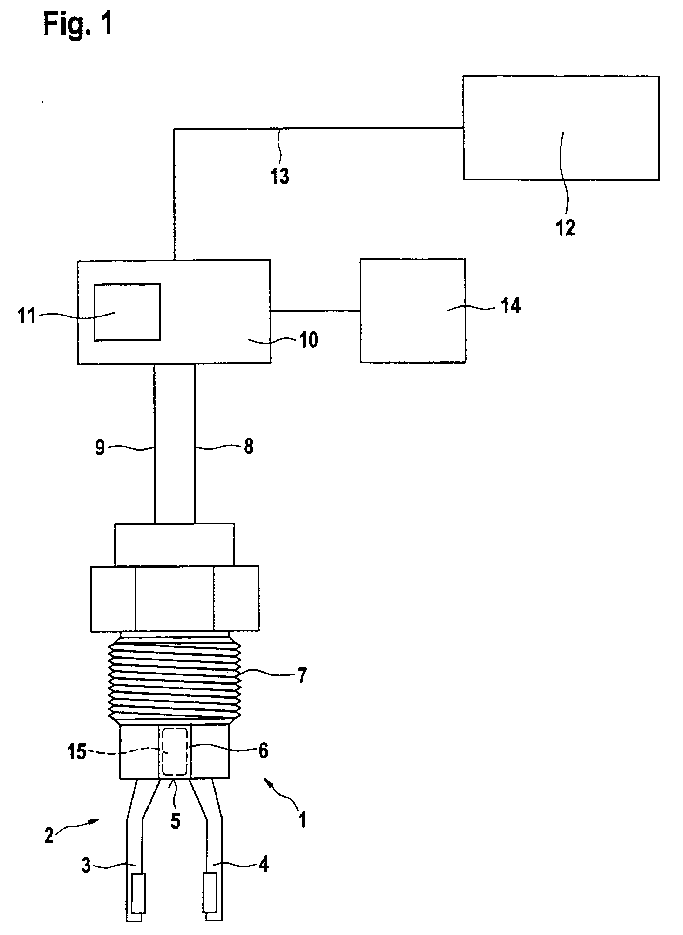

Fig. 1 zeigt eine schematische Darstellung der erfindungsgemäßen Vorrichtung zur Feststellung und/oder Überwachung des Füllstandes eines Füllguts in einem Behälter - Behälter und Füllgut sind übrigens in der Fig. 1 nicht gesondert dargestellt. Die in der Fig. 1 gezeigte Vorrichtung 1 ist - wie bereits an vorhergehender Stelle erläutert - neben der Füllstandserkennung auch zur Bestimmung der Dichte des in dem Behälter befindlichen Füllguts geeignet. Während im Fall der Füllstandserkennung die schwingfähige Einheit 2 nur bei Erreichen des Grenzfüllstandes in das Füllgut bzw. nicht in das Füllgut eintaucht, muß sie zwecks Überwachung bzw. zwecks Bestimmung der Dichte ρ kontinuierlich bis zu einer vorbestimmten Eintauchtiefe in das Füllgut eintauchen. Bei dem Behälter kann es sich beispielsweise um einen Tank aber auch um ein Rohr handeln, das von dem Füllgut durchflossen wird.

Die Vorrichtung 1 weist ein im wesentlichen zylindrisches Gehäuse auf. An der Mantelfläche des Gehäuses ist ein Gewinde 7 vorgesehen. Das Gewinde 7 dient zur Befestigung der Vorrichtung 1 auf der Höhe eines vorbestimmten Füllstandes und ist in einer entsprechenden Öffnung des Behälters angeordnet. Es versteht sich von selbst, daß andere Arten der Befestigung, z.B. mittels eines Flansches, das Verschrauben ersetzen können.

Das Gehäuse des Vibrationsdetektors 1 ist an seinem in den Behälter 3 hineinragenden Endbereich von der Membran 5 abgeschlossen, wobei die Membran 5 in ihrem Randbereich in das Gehäuse eingespannt ist. An der Membran 5 ist die in den Behälter ragende schwingfähige Einheit 2 befestigt. Im dargestellten Fall hat die schwingfähige Einheit 2 die Ausgestaltung einer Stimmgabel, umfaßt also zwei voneinander beabstandete, auf der Membran 5 befestigte und in den Behälter hineinragende Schwingstäbe 3, 4.

Die Membran 5 wird von einer Sende-/Empfangseinheit 6 in Schwingungen versetzt, wobei die Sendeeinheit die Membran 5 mit einer vorgegebenen Sendefrequenz zu Schwingungen anregt und die Empfangseinheit die Antwortsignale der schwingfähigen Einheit 2 empfängt. Die erfindungsgemäße Sende-/Empfangseinheit 6 wird im Zusammenhang mit den nachfolgenden Figuren noch im Detail erläutert. Aufgrund der Schwingungen der Membran 5 führt auch die schwingfähige Einheit 2 Schwingungen aus, wobei die Schwingungsfrequenz verschieden ist, wenn die schwingfähige Einheit 2 mit dem Füllgut in Kontakt ist und eine Massenankopplung an das Füllgut besteht oder wenn die schwingfähige Einheit 2 frei und ohne Kontakt mit dem Füllgut schwingen kann.

Piezoelektrische Elemente ändern ihre Dicke in Abhängigkeit von einer in Polarisationsrichtung anliegenden Spannungsdifferenz. Liegt eine Wechselspannung an, so oszilliert die Dicke: Nimmt die Dicke zu, so nimmt der Durchmesser des piezoelektrischen Elementes ab; nimmt andererseits die Dicke ab, so vergrößert sich der Durchmesser des piezoelektrischen Elements entsprechend.

Aufgrund dieses Schwingungsverhaltens des piezoelektrischen Elements 15 bewirkt die Spannungsdifferenz ein Durchbiegen der in das Gehäuse eingespannten Membran 5. Die auf der Membran 5 angeordneten Schwingstäbe 3, 4 der schwingfähigen Einheit 2 führen aufgrund der Schwingungen der Membran 5 gegensinnige Schwingungen um ihre Längsachse aus.

Die elektrischen Empfangssignale werden über Datenleitungen 8, 9 an die Regel-/Auswerteeinheit 10 weitergeleitet. Der Regel-/Auswerteeinheit 10 ist eine Speichereinheit 11 zugeordnet, in der Sollwerte abgelegt sind. Das Erreichen eines vorbestimmten Füllstandes oder einer vorbestimmten Dichte wird dem Bedienpersonal im gezeigten Fall über die Ausgabeeinheit 14 übermittelt. Weiterhin ist in Fig. 1 die von dem Vibrationsdetektor 1 entfernt angeordnete Kontroll- oder Leitstelle 12 zu sehen. Die Regel-/Auswerteeinheit 10 und die Kontrollstelle 12 kommunizieren miteinander über die Datenleitung 13. Bevorzugt erfolgt die Kommunikation wegen der erhöhten Störsicherheit der Übertragung auf digitaler Basis. Selbstverständlich kann die erfindungsgemäße Lösung auch in einen Kompaktsensor integriert sein.

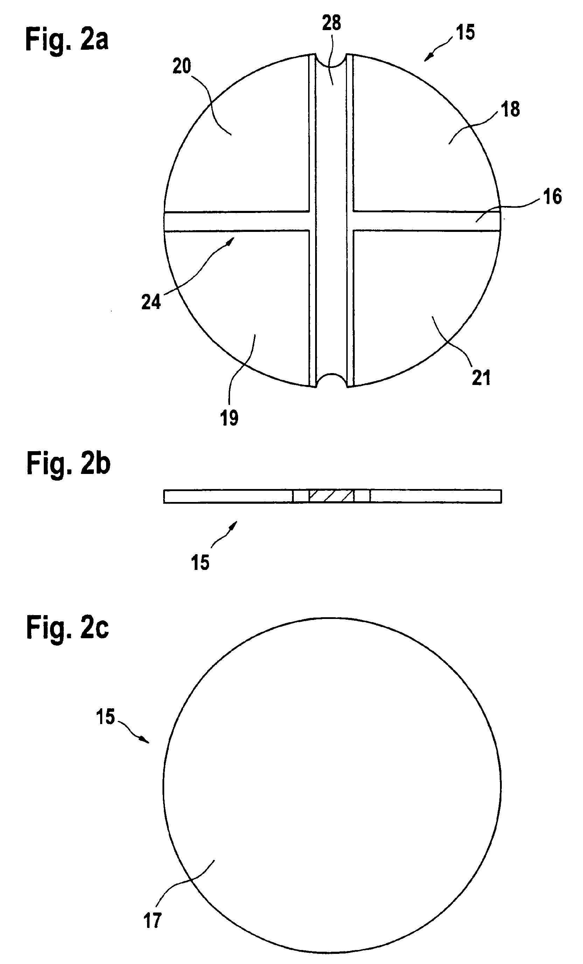

Fig. 2a zeigt eine Draufsicht auf die erste die Elektrodenstruktur 24 tragende Seite des piezoelektrischen Elements 15 gemäß einer ersten Variante der erfindungsgemäßen Vorrichtung. In Fig. 2b ist eine Seitenansicht des in Fig. 2a dargestellten piezoelektrischen Elements 15 dargestellt, und Fig. 2c zeigt eine Draufsicht auf die entsprechende zweite Seite 17 des piezoelektrischen Elements 15. Auf der ersten Seite 16 des piezoelektrischen Elements 15 ist eine Elektrodenstruktur 24, bestehend aus vier Elektroden 18, 19, 20, 21, angeordnet. Bei den Elektroden 18, 19, 20, 21 handelt es sich im dargestellten Fall um vier 90°-Kreissegmente, wobei sich jeweils zwei Elektroden 18, 19; 20, 21 punktsymmetrisch bezüglich des Kreismittelpunktes gegenüberliegen. Zwei sich punktsymmetrisch gegenüberliegende Elektroden bilden die Sendeelektroden 20, 21; die beiden verbleibenden Elektroden stellen die Empfangselektroden 18, 19 dar.

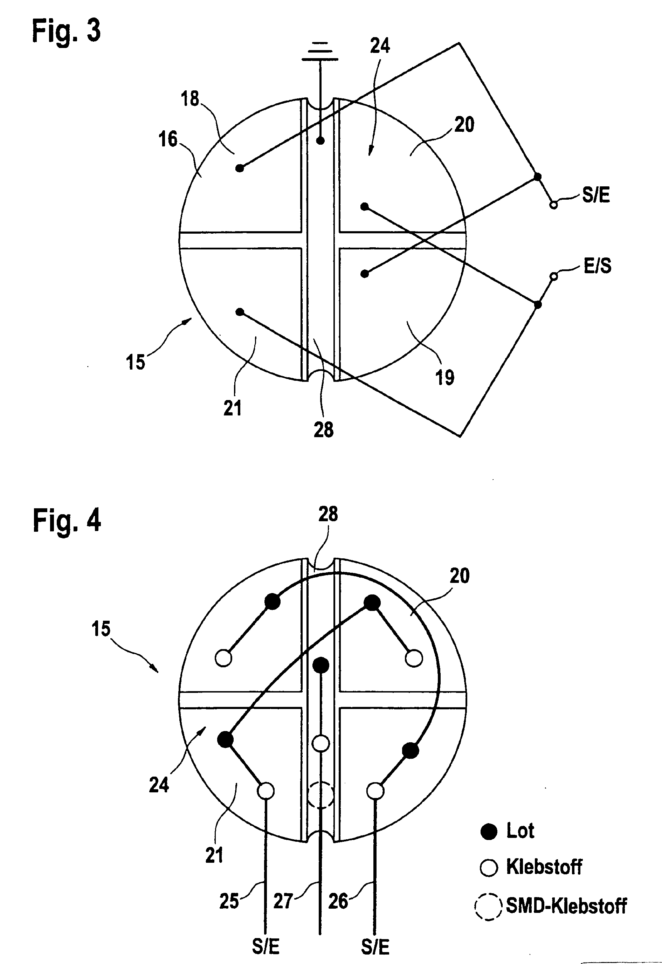

Wie bereits zuvor erwähnt, ist auf der zweiten Seite 17 des piezoelektrischen Elements 15 eine metallische Schicht 29 vorgesehen, die die Funktion der Masseelektrode übernimmt. Die Masseelektrode befindet sich auf der der Membran 5 zugewandten Seite des piezoelektrischen Elements 15. Wenn das Gehäuse des Vibrationsdetektors bzw. Dichtesensors 1 und die Membran 5 aus einem elektrisch leitfähigen Material bestehen und auf Massepotential liegen, genügt es, die leitfähige Schicht 29 elektrisch leitend, z. B. mittels eines leitfähigen Klebstoffs oder einer Lötpaste mit der Membran 5 zu verbinden.
In Zusammenhang mit der Beschreibung zu den Figuren Fig. 3 und Fig. 4 wird auf eine bevorzugte Ausgestaltung des piezoelektrischen Elements 15 Bezug genommen, die stets dann verwendet wird, wenn aus sicherheitstechnischen Gründen keine leitende Verbindung zwischen dem piezoelektrischen Element 15 und der Membran 5 bzw. dem Gehäuse des Vibrationsdetektors 1 bestehen darf oder wenn die Membran oder das Gehäuse des Vibrationsdetektors 1 aus einem nicht-leitfähigen Material bestehen. Falls nötig wird - wie in der EP 0 985 916 A1 beschrieben - zwischen der Membran 5 und der Masseelektrode ein dielektrisches Material in z. B. der Form einer Steatit-Scheibe angeordnet. Der entsprechende Offenbarungsgehalt der EP 0 985 916 A1 ist zum Offenbarungsgehalt der vorliegenden Anmeldung zuzurechnen.

In Fig. 3 ist eine bevorzugte Elektrodenstruktur 24 mit zwei Sendeelektroden 20, 21 und zwei Empfangselektroden 18, 19 dargestellt. Die Elektroden 18, 19, 20, 21 sind homogen polarisiert. Jeweils zwei punktsymmetrisch gegenüberliegende Elektroden 18, 19; 20, 21 bilden die Sendeelektroden 20, 21 bzw. die Empfangselektroden 18, 19. Aufgrund der Symmetrieverhältnisse der Elektrodenstruktur 24 können die Sendeelektroden 20, 21 und die Empfangselektroden 18, 19 problemlos ausgetauscht werden. Dieser Sachverhalt ist in der Fig. 3 symbolisch durch die Anschlußkennzeichnungen E/S bzw. S/E dargestellt. Aufgrund der speziellen Elektrodenstruktur in Verbindung mit der gleichsinnigen Polarisierung der Elektroden werden Gleichtaktstörungen, die durch Fremdvibrationen verursacht werden, automatisch eliminiert.

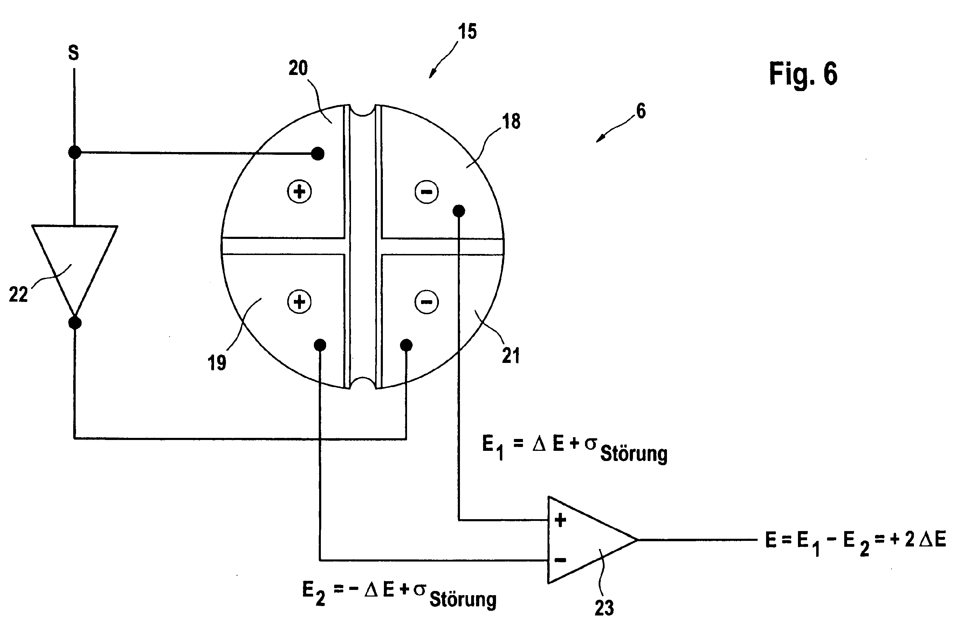

Fig. 4 zeigt eine schematische Darstellung der elektrischen Kontaktierungen der in den Figuren Fig. 2 bis Fig. 3 gezeigten Ausführungsform der erfindungsgemäßen Vorrichtung. Diese Art der Kontaktierung ist selbstverständlich auch für die zweite Ausführungsform der erfindungsgemäßen Elektrodenstruktur 24 des piezoelektrischen Elements 15 geeignet. Über die Leiterbahnen (Adern) 25, 26, 27 wird die in Fig. 3 bzw. Fig. 6 gezeigte Kontaktierung der einzelnen Elektroden 18, 19, 20, 21 der Elektrodenstruktur 24 erreicht. Bevorzugt sind die Leiterbahnen 25, 26, 27 in einen sog.

Flexjumper integriert. Bei dem Flexjumper handelt es sich um ein flexibles Band, über das einzelne Leiterbahnen miteinander verbunden sind. Die Ausgestaltung eines derartigen Flexjumpers ist in der bereits zitierten EP 0 985 916 offenbart.

In der EP 0 985 916 A1 ist auch die in den Figuren Fig. 3 und in der Fig. 4 gezeigte Ausgestaltung zu sehen, die es ermöglicht, die Masseelektrode ebenso wie die Sende- und Empfangselektroden 18, 19, 20, 21 auf der ersten Seite 16 des piezoelektrischen Elements 15 zu kontaktieren. Die Kontaktierung auf der ersten Seite 16 erfolgt über die Anschlußelektrode 18, die im gezeigten Fall die Form einer verbreiterten Diagonalen aufweist und die über die zylindrische Mantelfläche des piezoelektrischen Elements 15 hinweg in elektrischem Kontakt mit der leitfähigen Schicht 29 auf der zweiten Seite des piezoelektrischen Elements 15 steht. Hierdurch ist es möglich, alle erforderlichen Kontaktierungen in einem einzigen Schritt über ein Reflow-Verfahren zu realisieren, was natürlich zu einer beachtlichen Zeit- und Kosteneinsparung führt.

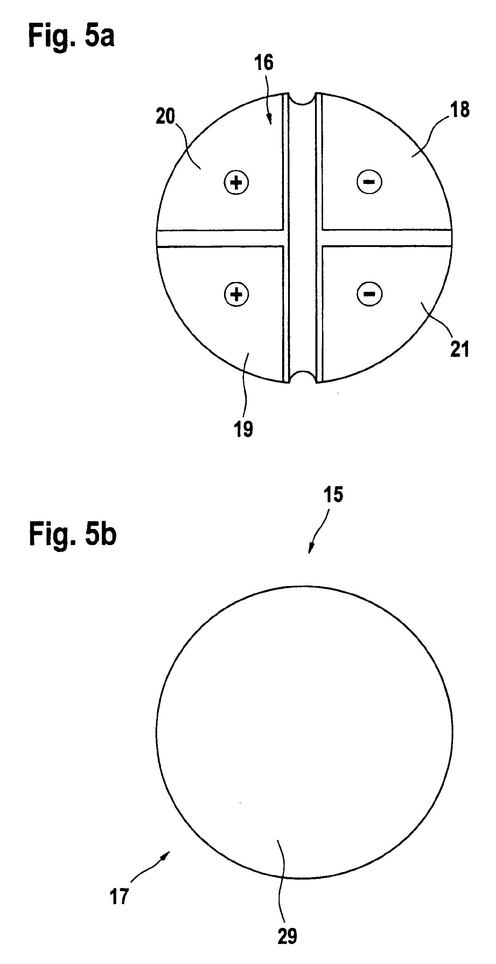

In Fig. 5a ist eine Draufsicht auf die erste die Elektrodenstruktur 24 tragende Seite 16 gemäß einer zweiten Ausführungsform der erfindungsgemäßen Sende-/ Empfangseinheit 6 zu sehen. Die beiden Elektroden 19, 20 auf der linken Seite des piezoelektrischen Elements 15 sind entgegengesetzt zu den beiden Elektroden 18, 21 auf der rechten Seite des piezoelektrischen Elements 15 polarisiert.

In Fig. 5b ist eine Draufsicht auf die zweite die leitfähige Schicht 29 tragende Seite des piezoelektrischen Elements 15 gemäß der zweiten Ausführungsform der erfindungsgemäßen Vorrichtung zu sehen. Wie bereits zuvor beschrieben, kann die leitfähige Schicht 29 über die leitfähige Membran 5 und das leitfähige Gehäuse direkt auf Masse liegen. Es ist aber auch möglich, daß die leitfähige Schicht 29 über eine Anschlußelektrode 29 auf der ersten die Elektrodenstruktur 24 tragenden Seite 16 des piezoelektrischen Elements 15 auf Massepotential liegt.

Fig. 6 zeigt ein Blockschaltbild der zweiten Ausführungsform der erfindungsgemäßen Vorrichtung (Fig. 5a, Fig. 5b) bzw. der erfindungsgemäßen Sende-/Empfangseinheit. Das über den Inverter 22 invertierte Sendesignal liegt an der Sendeelektrode 21 an; das nicht-invertierte Sendesignal liegt an der Sendeelektrode 20 an. An den beiden Sendeelektroden 20, 21 liegen somit Sendesignale an, die betragsmäßig gleich sind aber ein entgegengesetztes Vorzeichen aufweisen. Falls eine Gleichtaktstörung σ (in der Figur gekennzeichnet durch den Index Störung), die beispielsweise durch Netzbrummen und/oder durch Fremdvibrationen verursacht wird, auftritt, wird an der Empfangselektrode 18 ein Signal *E*₁ = + ΔE + σ und an der Empfangselektrode 19 ein Signal *E*₂ = - ΔE + σ abgegriffen. Beide Signale werden auf die Eingänge des Differenzverstärkers 23 gegeben, an dessen Ausgang das von der Gleichtaktstörung befreite Signal E = *E*₁ - *E*₂ = + 2 ΔE zur Verfügung steht. Mit der erfindungsgemäßen Vorrichtung, insbesondere also der erfindungsgemäßen Sende-/Empfangseinheit, lassen sich daher Störungen, die auf die beiden punktsymmetrisch angeordneten Elektroden 18, 19; 20, 21 jeweils gleichsinnig einwirken, auf sehr einfache und effektive Art und Weise beseitigen.

Ein Blockschaltbild einer Rückkopplungsschaltung für die erste Variante der erfindungsgemäßen Vorrichtung ist übrigens bereits in der bereits mehrfach zitierten EP 0 985 916 A1 offenbart, so daß an dieser Stelle auf die explizite Beschreibung verzichtet werden kann.

### Bezugszeichenliste

- 1: Vibrationsdetektor bzw. Dichtesensor
- 2: Schwingfähige Einheit
- 3: Schwingstab
- 4: Schwingstab
- 5: Membran
- 6: Sende-/Empfangseinheit
- 7: Gewinde
- 8: Datenleitung
- 9: Datenleitung
- 10: Regel-/Auswerteeinheit
- 11: Speichereinheit
- 12: Kontrollstelle
- 13: Datenleitung
- 14: Ausgabeeinheit
- 15: piezoelektrisches Element
- 16: erste Seite des piezoelektrischen Elements
- 17: zweite Seite des piezoelektrischen Elements
- 18: Empfangselektrode
- 19: Empfangselektrode
- 20: Sendeelektrode
- 21: Sendeelektrode
- 22: Inverter
- 23: Differenzverstärker
- 24: Elektrodenstruktur
- 25: erste Leiterbahn
- 26: zweite Leiterbahn
- 27: dritte Leiterbahn
- 28: Anschlußelektrode
- 29: leitfähige Schicht

## Patentansprüche

1. Vorrichtung zur Feststellung und/oder Überwachung des Füllstandes eines Füllguts in einem Behälter bzw. zur Ermittlung einer Prozeßgröße eines Füllguts in dem Behälter, wobei eine an einer Membran befestigte schwingfähige Einheit vorgesehen ist, wobei die schwingfähige Einheit auf der Höhe des vorbestimmten Füllstandes angebracht ist bzw. wobei die schwingfähige Einheit so angebracht ist, daß sie bis zu einer definierten Eintauchtiefe in das Füllgut eintaucht, wobei eine Sende-/Empfangseinheit vorgesehen ist, die die Membran und die schwingfähige Einheit mit einer vorgegebenen Sendefrequenz zu Schwingungen anregt und die die Schwingungen der schwingfähigen Einheit empfängt, und wobei eine Regel-/Auswerteeinheit vorgesehen ist, die das Erreichen des vorbestimmten Füllstandes erkennt, sobald eine vorgegebene Frequenzänderung auftritt bzw. die anhand der Schwingfrequenz der schwingfähigen Einheit die Dichte des Füllguts ermittelt,
**dadurch gekennzeichnet,**
**daß** es sich bei der Sende-/Empfangseinheit (6) um ein scheibenförmiges piezoelektrisches Element (15) handelt, auf dessen erster Seite (16) eine Elektrodenstruktur (18) vorgesehen ist, wobei die Elektrodenstruktur (18) zumindest zwei Sendeelektroden (20, 21) und zwei Empfangselektroden (18, 19) aufweist und wobei jeweils die erste Sendeelektrode (20) der zweiten Sendeelektrode (21) bzw. wobei die erste Empfangselektrode (18) der zweiten Empfangselektrode (19) im wesentlichen punktsymmetrisch gegenüberliegt.

2. Vorrichtung nach Anspruch 1,
**dadurch gekennzeichnet,**
**daß** die Sendeelektroden (20, 21) und/oder die Empfangselektroden (18, 19) der Sende-/Empfangseinheit (6) im wesentlichen formgleich sind.

3. Vorrichtung nach Anspruch 1 oder 2,
**dadurch gekennzeichnet,**
**daß** die Sendeelektroden (20, 21) und/oder die Empfangselektroden (18, 19) die Form von 90°-Kreissegmenten aufweisen.

4. Vorrichtung nach Anspruch 1, 2 oder 3,
**dadurch gekennzeichnet,**
**daß** die erste und die zweite Sendeelektrode (20, 21) bzw. daß die erste und die zweite Empfangselektrode (18, 19) entgegengesetzt polarisiert sind.

5. Vorrichtung nach Anspruch 4,
**dadurch gekennzeichnet,**
**daß** ein Inverter (22) vorgesehen ist, der das an einer der beiden Sendeelektroden (20, 21) der Sende-/Empfangseinheit (6) anliegende elektrische Signal invertiert.

6. Vorrichtung nach Anspruch 4 oder 5,
**dadurch gekennzeichnet,**
**daß** ein Differenzverstärker (23) vorgesehen ist, an dessen Eingängen die an den beiden Empfangselektroden (18, 19) abgegriffenen elektrischen Signale anliegen.

7. Vorrichtung nach Anspruch 1, 2 oder 3,
**dadurch gekennzeichnet,**
**daß** die Sendeelektroden (20, 21) und die Empfangselektroden (18, 19) der Sende-/Empfangseinheit (6) gleichsinnig polarisiert sind.

8. Vorrichtung nach einem oder mehreren der Ansprüche 1 bis 6 oder nach Anspruch 7,
**dadurch gekennzeichnet,**
**daß** das piezoelektrische Element (15) auf der zweiten Seite (17), welche der die Elektrodenstruktur (24) tragenden ersten Seite (16) gegenüberliegt, zumindest teilweise mit einer leitfähigen Beschichtung (29) versehen ist.

9. Vorrichtung nach Anspruch 8,
**dadurch gekennzeichnet,**
**daß** auf der die Elektrodenstruktur (24) tragenden erste Seite (16) des piezoelektrischen Elements (15) eine Anschlußelektrode (28) vorgesehen ist, die in zumindest einem Bereich mit der die Masseelektrode bildenden leitfähigen Beschichtung (29) auf der zweiten Seite (17) des piezoelektrischen Elements (15) verbunden ist.

## Claims

1. Unit for determining and/or monitoring the level of a medium in a tank, or for determining a process variable of a medium in the tank, **characterized in that** a unit capable of oscillation is secured to a membrane, said unit being fitted at the height of the predetermined level, and said unit being fitted in such a way that it is immersed in the medium up to a defined immersion depth. A transmitter/receiver unit is provided that uses a specified transmitting frequency to cause the membrane, and the unit capable of oscillation, to vibrate. This transmitter/receiver unit also receives the vibrations of the unit capable of oscillation. A control/evaluation unit is provided that recognizes when the prespecified level is reached as soon as a prespecified change in frequency occurs, or that determines the density of the medium using the vibration frequency of the unit capable of oscillation,
**characterized in that:**
the transmitter/receiver unit (6) is a discoid piezoelectric element (15) on whose first side (16) an electrode structure (18) is provided, whereby the electrode structure (18) exhibits at least two transmitting electrodes (20, 21) and two receiver electrodes (18, 19), and whereby the first transmitting electrode (20) is point symmetrically opposite the second transmitting electrode (21), and whereby the first receiver electrode (18) is point symmetrically opposite the second receiver electrode (19).

2. Unit as per Claim 1,
**characterized in that:**
The transmitting electrodes (20, 21) and/or the receiver electrodes (18, 19) of the transmitter/receiver unit (6) are primarily the same shape.

3. Unit as per Claim 1 or 2,
**characterized in that:**
The transmitting electrodes (20, 21) and/or the receiver electrodes (18, 19) are shaped like 90° circular segments.

4. Unit as per Claim 1, 2 or 3
**characterized in that:**
The first and second transmitting electrode (20, 21) and the first and second receiver electrode (18, 19) have opposite polarization.

5. Unit as per Claim 4,
**characterized in that:**
An inverter (22) is provided that inverts the electric signal present at one of the two transmitting electrodes (20, 21) of the transmitter/receiver unit (6).

6. Unit as per Claim 4 or 5,
**characterized in that:**
A differential amplifier (23) is provided at whose inputs the electrical signals taken at the two receiver electrodes (18, 19) are present.

7. Unit as per Claim 1, 2 or 3,
**characterized in that:**
The transmitter electrodes (20, 21) and the receiver electrodes (18, 19) of the transmitter/receiver unit (6) have similar polarization.

8. Unit as per one or several of the Claims 1 to 6, or as per Claim 7,
**characterized in that:**
The piezoelectric element (15) on the second side (17), which is opposite the first side (16) supporting the electrode structure (24), is at least partially provided with a conductive coating (29).

9. Unit as per Claim 8,
**characterized in that:**
A terminal electrode (28) is provided on the first side (16) of the piezoelectric element (15) supporting the electrode structure (24), said terminal electrode being connected, at least in one area, to the conductive layer (29) on the second side (17) of the piezoelectric element (15), said layer forming the ground electrode.

## Revendications

1. Dispositif destiné à la détermination et/ou la surveillance du niveau d'un produit au sein d'un réservoir, ou destiné à la détermination d'une grandeur process d'un produit au sein d'un réservoir, pour lequel est prévue une unité apte à vibrer, fixée sur une membrane, l'unité apte à vibrer étant installée à la hauteur du niveau ou l'unité apte à vibrer étant installée de telle manière qu'elle soit immergée dans le produit jusqu'à une profondeur d'immersion définie, dispositif pour lequel est prévu une unité d'émission/réception, qui excite en vibrations la membrane et l'unité apte à vibrer avec une fréquence d'émission prédéfinie, et qui reçoit les vibrations de l'unité apte à vibrer, et pour lequel est prévu une unité de régulation / d'exploitation, qui détecte l'atteinte du niveau prédéfini sitôt qu'apparaît un changement de fréquence prédéfini, ou qui détermine la densité du produit au moyen de la fréquence de vibrations de l'unité apte à vibrer,
**caractérisé en ce que**
concernant l'unité d'émission / de réception (6), il s'agit d'un élément piézoélectrique (15) en forme de disque, sur le premier côté (16) duquel est prévue une structure d'électrode (18), la structure d'électrodes (24) présentant au moins deux électrodes d'émission (20, 21) et deux électrodes de réception (18, 19), et la première électrode d'émission (20), ou la première électrode de réception (18), étant disposée pour l'essentiel selon une symétrie ponctuelle face à la deuxième électrode d'émission (21), ou la deuxième électrode de réception (19).

2. Dispositif selon la revendication 1,
**caractérisé en ce que**
les électrodes d'émission (20, 21) et/ou les électrodes de réception (18, 19) de l'unité d'émission / de réception (6) sont pour l'essentiel de forme identique.

3. Dispositif selon la revendication 1 ou 2,
**caractérisé en ce que**
les électrodes d'émission (20, 21) et/ou les électrodes de réception (18, 19) présentent la forme de segments de cercle à 90°.

4. Dispositif selon la revendication 1, 2 ou 3,
**caractérisé en ce que**
la première et la deuxième électrode d'émission (20, 21) ou la première et la deuxième électrode de réception (18, 19) sont polarisées en sens contraire.

5. Dispositif selon la revendication 4,
**caractérisé en ce qu'**
est prévu un inverseur (22), qui inverse le signal électrique présent sur l'une des deux électrodes d'émission (20, 21) de l'unité d'émission / de réception (6).

6. Dispositif selon la revendication 4 ou 5,
**caractérisé en ce qu'**
est prévu un amplificateur différentiel (23), aux entrées duquel sont appliqués les signaux électriques prélevés sur les deux électrodes de réception (18, 19).

7. Dispositif selon la revendication 1, 2 ou 3,
**caractérisé en ce que**
les électrodes d'émission (20, 21) et les électrodes de réception (18, 19) de l'unité d'émission / de réception (6) sont polarisées selon un même sens.

8. Dispositif selon l'une ou plusieurs des revendications 1 à 6 ou selon la revendication 7,
**caractérisé en ce que**
l'élément piézoélectrique (15) se trouvant sur le deuxième côté (17), qui se situe à l'opposé du premier côté (17) portant la structure d'électrodes (24), est au minimum muni partiellement d'un revêtement conducteur (29).

9. Dispositif selon la revendication 8,
**caractérisé en ce qu'**
est prévu sur le premier côté (16) de l'élément piézoélectrique (15), portant la structure d'électrodes (24), une électrode de raccordement (28), dont au moins une zone est reliée avec le revêtement conducteur (29) formant l'électrode de masse, se trouvant sur le deuxième côté (17) de l'élément piézoélectrique (15).
